Europäisches Patentamt

European Patent Office

Office européen des brevets

(11) Veröffentlichungsnummer: **0 266 675**
**A2**

(12) **EUROPÄISCHE PATENTANMELDUNG**

(21) Anmeldenummer: 87115887.9

(51) Int. Cl.4: **C08L 71/04** , **C08L 51/04**

(22) Anmeldetag: 29.10.87

(30) Priorität: 05.11.86 DE 3637586

(43) Veröffentlichungstag der Anmeldung:
11.05.88 Patentblatt 88/19

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Ostermayer, Bertram, Dr.**
**Pfaffenpfad 14**
**D-6701 Roedersheim-Gronau(DE)**
Erfinder: **Echte, Adolf, Dr.**
**Leuschnerstrasse 42**
**D-6700 Ludwigshafen(DE)**
Erfinder: **Klaerner, Peter, Dr.**
**Hauptstrasse 62**
**D-6719 Battenberg(DE)**
Erfinder: **Seiler, Erhard, Dr.**
**Erpolzheimer Strasse 1**
**D-6700 Ludwigshafen(DE)**
Erfinder: **Brandt, Hermann, Dr.**
**Keltenstrasse 30**
**D-6707 Schifferstadt(DE)**

(54) **Thermoplastische Formmassen.**

(57) Die Erfindung bezieht sich auf thermoplastische Formmassen, die schlagzähes Polystyrol und Polyphenylenether enthalten und die sich durch günstige Kombination ihrer Materialeigenschaften auszeichnen. Die Massen enthalten schlagzähes Polystyrol, dessen Weichkomponentengehalt, Kautschukgehalt und Größe der Weichkomponententeilchen in einem bestimmten Bereich liegen.

EP 0 266 675 A2

## Thermoplastische Formmassen

Die Erfindung betrifft thermoplastische Formmassen auf der Grundlage von schlagfest modifizierten Styrolpolymerisaten und Polyphenylenethern.

Thermoplastische Massen, die sich zur Herstellung von Formteilen eignen und die schlagzäh modifizierte Styrolpolymerisate und Polyphenylether enthalten sind z.B. aus den US-Patentschriften 3 383 435, 4 128 602 sowie der DE-AS 22 11 005 bekannt. Solche Formmassen eignen sich zur Herstellung von Formteilen, die sich im Vergleich zu schlagzäh modifizierten Styrolpolymeristen, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß einige Eigenschaften der Massen noch unbefriedigend sind.

Zur Verbesserung der Eigenschaften hat man bereits vorgeschlagen, solche Mischungen auf schlagzäh modifiziertem Polystyrol und Polyphenylenether zu verwenden mit bimodaler Teilchengrößenverteilung (EP-A-0 048 399). Es wurde auch schon vorgeschlagen, in den Massen ein schlagzähes Polystyrol zu verwenden mit einem Anteil an Weichkomponente von oberhalb 27 Gew.% (EP-A-0 058 930). Aber auch derartige Massen sind noch hinsichtlich ihrer Eigenschaften verbesserungsbedürftig.

Der vorliegenden Erfindung lag daher die Aufgabe zugrunde, thermoplastische Formmassen auf der Grundlage von schlagfest modifizierten Styrolpolymerisaten und Polyphenylenethern zu schaffen, mit verbesserten mechanischen Eigenschaften.

Diese Aufgabe wird erfindungsgemäß gelöst durch Formmassen, die enthalten

A 80 bis 20 Gew.-Teile wenistens eines schlagfest modizierten Styrolpolymerisats,

B 20 bis 80 Gew.-Teile eines Polyphenylenethers, sowie

C - gegebenenfalls - einschlägig übliche Zusatzstoffe in wirksamen Mengen.

Die erfindungsgemäß Formmassen sind dadurch gekennzeichnet, daß der Anteil an Weichkomponente im schlagfest modifizierten Styrolpolymerisat A zwischen 32 und 43 Gew.%, bezogen zuf das schlagfest modifizierte Polymerisat, liegt, wobei unter Weichkomponente der in Methylethylketon/Aceton (Volumenverhältnis 1:1) unlösliche Anteil des schlagfest modifizierten Polystyrols (abzüglich etwaiger Pigmente) verstanden wird, der Kautschukgehalt 12 bis 15 Gew.%, bezogen auf das schlagfest modifizierte Polymerisat beträgt und die Teilchen der Weichkomponente einen mittleren Durchmesser (Gewichtsmittel) von 0,6 bis 1,4 μm haben.

Die erfindungsgemäßen Formmassen zeichnen sich durch eine günstige. Eigenschaftkombination aus. Gute Steifigkeit und Zähigkeit vereinen sich mit vorteilhaften Oberflächenglanz, wobei die Eigenschaft der Zähigkeit auch bei hohen Pigmentanteil erhalten bleibt.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern dafür gesorgt ist, daß sich ein Anteil an Weichkomponent von zwischen 32 und 43 Gew.% ergibt. Es ist zweckmäßig, daß der Anteil an Weichkomponente 43 Gew.% nicht übersteigt, da bei höherem Weichkomponentengehalt nicht alle Materialeigenschaften des - schlagzähen Polystyrols im günstigen Bereich liegen.

Die thermoplastischen Formmassen enthalten schlagfest modifizierte Styrolpolymerisate und Polyphenylenethern in Mengen, von 20 bis 80 Gew.% Styrolpolymerisate und 80 bis 20 Gew.% Polyphenylenether enthalten. Für die Herstellung von Formteilen eignen sich insbesondere solche Formmassen, die 30 bis 70 Gew.% schlagfest modifizierte Styrolpolymerisate und 70 bis 30 Gew.% Polyphenylenether enthalten.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrößenkombination eingestellt wird.

Als monovinylaromatische Verbindungen kommen dabei insbesondere Styrol in Betracht, ferner die kern-oder seitenkettenalkylierten Styrole. Vorzugsweise wird jedoch Styrol allein verwendet.

2

Als Kautschuke werden die üblicherweise für die Schlagfestmodifizierung von Styrolpolymerisaten gebräuchlichen natürlichen oder synthetischen Kautschuke eigesetzt. Geeignete Kautschuke im Sinne der Erfindung sind neben Naturkautschuk, z.B. Polybutadien, Polyisopren und Mischpolymerisate, des Butadiens und/oder Isoprens mit Styrol -20°C besitzen. Besonders eignen sich Butadien-Polymerisate mit einem 1,4-cis-Gehalt der zwischen 25 und 98 Gew.% liegt.

Die Herstellung der schlagfest modifizierten Polymerisate mit dem erfindungsgemäßen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gew.%, bezogen auf die eigneseinzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Ethylbenzol, die Xylole oder Gemische dieser Verbindungen.

Bei der Polymerisation in Masse oder Lösung wird in der Regel in einem Temperaturbereich zwischen 50 und 250°C, vorzugsweise 100 bis 200°C, polymerisiert. Der Polymersationsansatz muß dabei mindestens im ersten Abschnitt der Polymerisation, d.h. bis zu Umsätzen der monovinylaromatischen Verbindungen gleich oder kleiner 45 Gew.% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1. S. 1 bis 11, sowie in den US-Patentschriften 2 694 692 und 2 862 906 auf die wegen weiterer Einzelheiten verwiesen werden soll.

Unter Weichkomponente im Sinne dieser Erfindung wird der bei Raumtemperatur (25°C) in Methylethylketan/Aceton (Volumenverhältnis 1:1) unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks in monomeren Vinylaromaten, zunächst die kohärente Phase bildet, während die zweite, eine Lösung des Polyvinylaromaten in seinem eignen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (s. z.B. Freeguard, Brit. Polym. J. 6 (1974) S. 203 bis 228; Wagner, Robeson, Rubber Chem. Techn. 43 (1970), 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 34 Gew.% und höchstens 43 Gew.% und mehr, bezogen auf das schlagfest modifizierte Polymerisat, beträgt. Für die erfindungsgemäßen thermoplastischen Formmassen hat sich dabei ein schlagfest modifiziertes Polymerisat als besonders günstig erwiesen, dessen Kautschuk-Anteil zwischen 12 und 15 Gew.% liegt. Der Kautschukgehalt kann durch Titration der Doppelbindungen des Kautschuks ermittelt werden. Die Struktur des Kautschuks kann auch durch Infrarotanalyse des von der Mischung abgetrennten Kautschuks ermittelt werden. Die Berechnungen ergeben die C-C-Doppelbindungen im Kautschuk. Die Formmasse hat die Mikrostruktur des zu ihrer Herstellung verwendeten Kautschuks.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschukteilchen partiell vernetzt und in mehr oder weniger starkem Maße während der Polymerisation durch die monovinylaromatischen Verbindung gepfropft worden sind.

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d.h. bis zu einem Umsatz der Monomeren von gleich oder kleiner als 45%. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilen im resultierenden - schlagfesten Polymerisat ist z.B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt unter anderem von den jeweiligen Apparateverhältnissen ab und ist dem Fachmann bekannt bzw. läßt sich durch ein paar einfache Versuche bestimmen.

Die Bestimmung der mittleren Teilchengröße der dispersen Weichkomponente kann z.B. durch Auszählung und Auswertung elektronenmikroskopischer Dünnschichtaufnahmen der schlagfest modifizerten Polymerisate erfolgen (vgl. F. Lenz, Zeitschrift für Wiss. Mikroskopie, 63 (1956), S. 50/56).

Die mittlere Teilchengröße (Gewichtsmittel) der dispersen Weichkomponenten-Phase wurde bestimmt durch Auszählen und Mitteln der zur gleichen Größenklasse (konst. Interwallbreite) gehörigen Teilchen aus elektronenmikroskopischen Dünnschichtaufnahmen. Mit den Volumina der Teilchen (3. Potenz des - scheinbaren Durchmessers) innerhalb der Intervalle wird die Verteilungssummenkurve bestimmt. Beim 50 %-Ordinatwert kann auf der Abszisse der Äquivalentdurchmesser kann abgegriffen werden. Die angegebenen mittleren Durchmesser stellen dabei einen Mittelwert von mindestens 5000 Teilchen dar. Der mittlere Durchmesser der Teilchen soll von 0,3 bis 0,8 $\mu$m betragen.

Zur Bestimmung des Weichkomponentanteils wird das schlagfest modifizierte Polystyrol bei Raumtemperatur in Methylethylketon/Aceton (Volumenverhältnis 1:1) gelöst; der unlösliche Gelanteil wird bei 30 000 g abgeschleudert und nach Dekantieren der Lösung, isoliert, getrocknet und gewogen.

Der Weichkomponentanteil wird wiedergegeben durch das Verhältnis

$$G = \frac{\text{Trockengewicht des Gels}}{\text{Einwaage an Polymeren}} \cdot 100 \text{ Gew.\%}$$

Dieser Weichkomponentanteil (auch "Gelgehalt") muß zwischen 34 und 43 Gew.% liegen.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoff, die kein $\alpha$-ständiges tert. Wasserstoffatom besitzen, Halogenkohlenwasserstoffe, Phenylreste und Kohlenwasserstoff-oxi-Reste betragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt werden Poly(2,6-dimethyl-1,4-phenylen)ether mit einer Grenzviskosität zwischen 0,45 und 0,65 dl/g (gemessen in Chloroform bei 30°C).

Die Mischungen aus den schlagzäh modifizierten Styrolpolymerisaten und Polyphenylenethern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her. Neben der hohen Kältezähigkeit haben die Formmassen weitere gute Eigenschaften, wie eine hohe Wärmeformbeständigkeit. Sie führen außerdem zu Fertigteilen mit einem hohen Glanz.

Die in der Tabelle angegebenen Gewichtsteile schlagfest modifizierten Polystyrol und von Poly(2,6-dimethyl-1,4-phenylen)ether wurden mit jeweils 0,8 Gew.-Teilen Tri(nonylphenyl)phosphit und 1,5 Gew.-Teilen Polyethylen auf einem 2-Wellen-Extruder bei 280°C geschmolzen, homogenisiert, gemischt und granuliert. Das Poly(2,6-dimethyl-1,4-phenylen)ether hatte eine Grenzviskosität von 0,5 dl/g. Die Weißeinstellung enthielt 3 Gew.-Teile Titandioxid.

Aus den Mischungen wurden mittels einer Spritzgußmaschine bei 280°C Prüfkörper hergestellt. An diesen Prüfkörpern wurde nach DIN 53 443, Blatt 1 die Bruchenergie bei -20°C bestimmt.

Der Erweichungspunkt wurde nach Vicat gemäß DIN 53 460/B bestimmt.

Der Glanz wurde an spritzgegossenen Rechteckplättchen nach DIN 67 530 mittels einer Labor-Reflektometers der Fa. Lange bei einem Einfallswinkel von 45° gemessen. Diese Art der Glanzmessung ist eine Relativmessung. Seine Einheit wird in %, bezogen auf einen von der Fa. Lange mitgelieferten Standard, angegeben. Als Bedingungen für den Spritzguß wurden eine Masse-(Kunststoff)-temperatur von 300°C, eine Formtemperatur von 86°C und eine Einspritzzeit von 0,4 s gewählt.

Tabelle

| Beispiele (erfindungsgemäß) | schlagfest modifiziertes Polystyrol | | | | Poly(2,6-dimethyl-1,4-phenylenether) (Gew.Teile) | Bruchenergie bei $-20^0$C (Nm) | | Vicat ($^0$C) | | Glanz % | |
|---|---|---|---|---|---|---|---|---|---|---|---|
| | Weichkomponentenanteil (Gew.%) | Polybutadiengehalt (Gew.%) | Gew.-Teile in der Mischung | mittlere Teilchengröße $d_{50}$ ($\mu$m) | | Natur | Weißeinstellung | Natur | Weißeinstellung | Natur | Weißeinstellung |
| 1 | 33 | 13,1 | 55 | 0,8 | 45 | 30,3 | 29,4 | 130 | 131 | 50 | 50 |
| 2 | 35 | 12,4 | 60 | 1,0 | 40 | 33,5 | 33,1 | 128 | 129 | 48 | 47 |
| 3 | 40 | 14,3 | 50 | 1,3 | 50 | 27,4 | 26,0 | 135 | 137 | 58 | 51 |
| Vergleichsversuche (nicht erfindungsgemäß) | | | | | | | | | | | |
| A | 29 | 11,0 | 55 | 1,0 | 45 | 24,6 | 17,3 | 126 | 127 | 47 | 46 |
| B | 35 | 10,2 | 60 | 1,5 | 40 | 22,1 | 15,4 | 125 | 126 | 41 | 38 |
| C | 46 | 15,8 | 50 | 2,0 | 50 | 25,4 | 16,3 | 128 | 129 | 49 | 48 |

## Ansprüche

Thermoplastische Formmassen, enthaltend

A 80 bis 20 Gew.-Teile wenigstens eines schlagfest modifizierten Styrolpolymerisates,

B 20 bis 80 Gew.-Teile eines Polyphenylenethers, sowie

C - gegebenenfalls - einschlägig übliche Zusatzstoffe in wirksamen Mengen,

dadurch gekennzeichnet, daß der Anteil an Weichkomponente im schlagfest modifizierten Styrolpolymerisat A zwischen 32 und 43 Gew.%, bezogen auf das schlagfest modifizierte Polymerisat, liegt, wobei unter Weichkomponente der in Methylethylketon/Aceton (Volumenverhältnis 1:1) unlösliche Anteil des schlagfest modifizierten Polystyrols verstanden wird, der Kautschukgehalt 12 bis 15 Gew.%, bezogen auf das - schlagfest modifizierte Polymerisat beträgt und die Teilchen der Weichkomponente einen mittleren Durchmesser (Gewichtsmittel) von 0,6 bis 1,4 μm haben.